# EUROPÄISCHE PATENTSCHRIFT

(11) **EP 0 925 993 B1**
(45) Veröffentlichungstag und Bekanntmachung des Hinweises auf die Patenterteilung: **22.07.2009**
(21) Anmeldenummer: 98123300.0
(22) Anmeldetag: 08.12.1998
(51) Int. Cl.: B60L 7/02, H02P 3/06, H01C 1/082

(54) **Elektrische Bremswiderstandsbaueinheit für elektrische Antriebssysteme**
Electrical brake resistor for electric drive systems
Résistance électrique de freinage pour des systèmes d'entraînement électriques

(30) Priorität: 11.12.1997 DE 19754932
(43) Veröffentlichungstag der Anmeldung: 30.06.1999
(73) Patentinhaber: Voith Turbo GmbH & Co. KG, 89522 Heidenheim (DE)
(72) Erfinder: Quack, Wolfgang, 89547 Gerstetten (DE)
(74) Vertreter: Dr. Weitzel & Partner

(56) Entgegenhaltungen:
- EP-A- 0 585 611
- EP-A- 0 872 853
- DE-A- 3 933 956
- DE-A- 4 225 724
- DE-A- 19 545 447

## Beschreibung

Die Erfindung betrifft eine elektrische Bremswiderstandsbaueinheit für elektrische Antriebssysteme, im einzelnen mit den Merkmalen aus dem Oberbegriff des Anspruches 1.

Elektrische Bremswiderstände für Antriebssysteme von elektrisch angetriebenen Fahrzeugen, wie zum Beispiel hybrid-, batterie- oder dieselelektrische Fahrzeuge, werden derzeit durch zusätzliche beziehungsweise freie elektrische Schalter in den vorhandenen Umrichter beziehungsweise Wechselrichterbaueinheiten, sogenannte Bremschopper, angesteuert. Diese Bremswiderstände sind zumeist luft- oder wassergekühlt. Im Detail wird dazu beispielsweise an einem dieselelektrisch angetriebenen Fahrzeug die im Bremsbetrieb erzeugte und in den Spannungszwischenkreis zwischen den als Antriebsmotoren im Traktionsbetrieb fungierenden Elektromotoren und der als Generator betreibbaren elektrischen Maschine eingespeiste Leistung über die Umrichtereinheiten den Bremswiderständen zugeführt und eingestellt. Dies hat den Nachteil, daß die Gesamtbremsleistung der Bremswiderstände begrenzt wird; insbesondere entscheidet die Auslegung des Umrichters beziehungsweise Wechselrichters über die in einem Gesamtsystem verfügbare elektrische Bremsleistung und nicht die eigentlich theoretisch zur Verfügung stellbare generatorische Leistung an den die Räder antreibenden Antriebsmotoren. Dies ist besonders dann von Nachteil, wenn die über den Bremswiderstand erzeugte Bremsleistung an geographische oder fahrzeugspezifische Gegebenheiten angepaßt werden muß und diese vom Durchschnittsfahrzeug erheblich abweichen. Außerdem erfordert diese Lösung das Bekanntsein der elektrischen Daten des Bremswiderstandes für die Entwicklung des Umrichters beziehungsweise Stromrichters. Der Bremswiderstand kann desweiteren dann nur mit den entsprechend ausgelegten Umrichtern betrieben werden. Außerdem ist eine zusätzliche Abschirmung der Zuleitung vom Wechselrichter zum Bremswiderstand erforderlich, da die steilen Spannungsflanken, bei einem getakteten rein ohmschen Widerstand, elektrische Felder erzeugen, die sonst für Personen mit Herzschrittmachern lebensbedrohlich werden könnten.

EP 0 872 853 beschreibt eine Einrichtung zur Kühlung von Bremswiderständen für elektrisch angetriebene Fahrzeuge unter Verwendung eines Luft-Flüssigkeits-Wärmetauschers, wobei die Bremswiderstände von dem Luft-Flüssigkeits-Wärmetauscher umgeben sind.

EP 0 585 611 beschreibt einen Leistungswiderstand für Flüssigkeitskühlung, bei dem mindestens ein Widerstandselement über Isolierplatten zwischen zwei metallischen Flachgehäusen angeordnet ist, offenbart. Dabei weist jedes Flachgehäuse zwei interne Kühlflüssigkeitssammelräume auf, ein Flachkanal verbindet dabei beide Kühlflüssigkeitssammelräume miteinander. Letztere weisen Öffnungen für Kühlflüssigkeitszulauf und -ablauf auf, wobei sich jeweils mindestens ein Widerstandselement im zwischen zwei Flachgehäusen gebildeten Zwischenraum befindet und im Wärmekontakt mit dem Flachkanal steht.

Der Erfindung liegt daher die Aufgabe zugrunde, einen elektrischen Bremswiderstand beziehungsweise eine elektrische Bremswiderstandsbaueinheit der eingangs genannten Art derart weiter zu entwickeln, daß die genannten Nachteile vermieden werden. Die elektrische Bremswiderstandsbaueinheit soll sich daher durch einen geringen konstruktiven und fertigungstechnischen Aufwand auszeichnen und gleichzeitig eine möglichst universelle Einsetzbarkeit ermöglichen.

Die erfindungsgemäße Lösung der Aufgabe ist durch die Merkmale des Anspruchs 1 charakterisiert. Vorteilhafte Ausgestaltungen sind in den Unteransprüchen wiedergegeben.

Eine elektrische Bremswiderstandsbaueinheit für den Einsatz in elektrischen Antriebssystemen, insbesondere in Antriebssystemen für Straßenfahrzeuge, welche primär der Aufnahme der anfallenden elektrisch vorliegenden Bremsleistung dient, und sekundär sozusagen als Nebeneffekt als Heizmittel einsetzbar ist, umfaßt wenigstens ein Gehäuse, in welchem wenigstens ein elektrischer Widerstand integrierbar ist. Es sind Mittel vorzusehen, welche wahlweise einen Stromkreis über den elektrischen Widerstand oder unter Umgehung dessen realisieren. Der elektrische Widerstand ist daher vorzugsweise schaltbar, d. h. diesem ist ein Stellglied zugeordnet, welches wenigstens die Zuschaltung oder Entkopplung vom Spannungskreis ermöglicht. Denkbar ist jedoch auch eine Ausführung, mit welcher der elektrische Widerstand in seiner Größe stufenweise oder stufenlos von Null bis auf einen bestimmten Wert einstellbar ist. Dies wird ebenfalls durch Aktivierung entsprechender Stellglieder realisiert.

Vorzugsweise werden die Bremswiderstände in der Regel getaktet, d. h. schnelles Ein-/Ausschalten im kHz-Bereich, um so den aufgenommenen Strom bzw. die Leistung zu regeln. Dem elektrischen Widerstand ist eine Kühlvorrichtung zur wenigstens indirekten Kühlung zugeordnet. Erfindungsgemäß ist desweiteren eine Steuervorrichtung vorgesehen, welche der Ansteuerung des elektrischen Widerstandes dient. Steuervorrichtung und Stellglied sind dabei in der Bremswiderstandsbaueinheit integriert. Integration in diesem Sinne bedeutet, daß Steuervorrichtung, Stellglied und Bremswiderstand zu einer bzw. in einer Baueinheit zusammenfaßbar sind, welche vorfertigbar und eigenständig handelbar ist. Dies ermöglicht es auch den elektrischen Bremswiderstand bzw. die Bremswiderstandsbaueinheit modular aufzubauen, so daß dieser eigenständig betreibbar ist. Unter eigenständig betreibbar wird dabei eine Betriebsweise verstanden, die es erlaubt, die Ansteuerung des Bremswiderstandes direkt und nicht gezwungenermaßen über andere Steuereinrichtungen in einem elektrischen Antriebssystem vorzunehmen. Die gesamte elektrische Bremswiderstandsbaueinheit kann vorgefertigt angeboten werden und damit eine optimale Anpassung an gegebene Einsatzerfordemisse ermöglicht werden.

Der modulare Aufbau, inklusive der im Bremswiderstandsgehäuse integrierten Ansteuerelektronik, erübrigt die Verwendung von geschirmten Leitungen, da außerhalb des Bremswiderstandes keine kritischen elektrischen Felder auftreten. Dabei kann das Bremswiderstandsgehäuse, sofern dieses aus elektrisch aktivem Material besteht, für die intern auftretenden elektrischen Felder bereits eine ausreichende Abschirmung bilden.

Für die Anordnung der Steuervorrichtung ergeben sich im wesentlichen zwei grundlegende Möglichkeiten:
1. Integration der Steuervorrichtung im Gehäuse der Bremswiderstandsbaueinheit
2. Anordnung der Steuervorrichtung direkt am Gehäuse der Bremswiderstandsbaueinheit.
   Während die erstgenannte Möglichkeit den Vorteil einer räumlich nahen Anordnung zwischen der Steuervorrichtung und dem elektrischen Bremswiderstand ermöglicht, was sich in einer sehr kompakten Bauweise niederschlägt, ermöglicht die zweite Variante einen schnelleren Austausch der Steuervorrichtung bei eventueller Beschädigung. Die Steuervorrichtung kann dabei entweder angeflanscht oder mittels einer Steckverbindung mit dem Gehäuse der Bremswiderstandsbaueinheit gekoppelt werden.

Auch mit dieser Lösung werden die erforderlichen Verbindungsleitungen hinsichtlich ihrer Länge sehr gering gehalten. Die Anforderungen an die EMV-Schirmung sind daher gering.

Der elektrische Widerstand ist Bestandteil eines ersten elektronischen Teiles der Bremswiderstandsbaueinheit. Den zweiten Teil der Bremswiderstandsbaueinheit bildet eine Kühlvorrichtung. Der elektronische Teil umfaßt wenigstens zwei Leitungsstränge, einen ersten Leitungsstrang und einen zweiten Leitungsstrang, welche über eine Verbindungsleitung, in welcher der elektrische Widerstand angeordnet ist und die zubeziehungsweise abschaltbar ist, miteinander elektrisch koppelbar sind, um beim Anschluß der beiden Leitungsstränge an einen Spannungskreis und gewünschter Erzeugung von Bremsleistung einen geschlossenen Stromkreis über den elektrischen Widerstand zu realisieren. Soll keine Bremsleistung in Wärme umgewandelt werden, sind die beiden Leitungsstränge Bestandteil des Spannungskreises, an weichen sie angeschlossen sind bzw. in welchen sie integriert sind. Vorzugsweise erstrecken sich die Leitungsstränge jeweils über die gesamte Breite des Sremswiderstandsgehäuses. Die einzelnen Anschlüsse sind dabei vorzugsweise derart ausgeführt, daß diese an den einander gegenüberliegenden Gehäusewänden angeordnet sind, wobei die Anordnung ebenfalls gegenüberliegend, das heißt in gleicher Höhe und dem gleichen Abstand von der Gehäusewand erfolgt. Dadurch wird es möglich, den Anschluß an den Spannungskreis unabhängig von der Einbaulage der elektrischen Bremswiderstandsbaueinheit zu realisieren, d. h. die Anschlüsse können vertauscht werden. Des weiteren ermöglicht diese Ausführung auch die Schaffung einer Art Blockbauweise, d. h. eine hintereinander erfolgende Anordnung einzelner elektrischer Bremswiderstandsbaueinheiten, die miteinander zu einer Gesamtbremswiderstandsbaueinheit verbunden sind und damit eine Parallelschaltung mehrerer elektrischer Bremswiderstände ermöglichen. Die einzelne Bremswiderstandsbaueinheit kann in diesem Fall auch als Bremswiderstandsmodul bezeichnet werden, wobei dann aus einer Vielzahl von miteinander verbundenen Modulen die Gesamtbremswiderstandsbaueinheit entsteht.

Voraussetzung dafür ist jedoch eine entsprechende Ausgestaltung der entsprechenden elektrischen und mechanischen Anschlußvorrichtungen bzw. Anschlußmittel. So sollte vorzugsweise ein Bremswiderstandsmodul derart aufgebaut sein, daß die auf einer Gehäuseseite angeordneten Anschlüsse hinsichtlich der die Verbindung realisierenden Elemente jeweils komplementär zu den Anschlußelementen der zugeordneten auf der gegenüberliegenden Gehäusewand angeordneten Anschlüsse ausgebildet sind. Eine andere Möglichkeit besteht in der Verwendung von Verbindungselementen, welche je nach Ausbildung der Anschlüsse zweier nebeneinander anzuordnender Bremswiderstandsmodule die jeweils zur Realisierung einer Kopplung komplementären Elemente aufweisen. Beispielsweise enthält der Bremswiderstand Anschlüsse zur Realisierung der elektrischen Kopplung mit einem Spannungskreis in Form von Stecköffnungen, in welche die Stecker der anzuschließenden Leitungen eingeführt werden.

Diese Aussagen gelten in der Analogie auch für die Anordnung der elektrischen Steuervorrichtung, insbesondere von deren Anschlüssen beziehungsweise Durchgangsöffnungen für Leitungsverbindungen an der Bremswiderstandsgehäusewand.

Die modulare Bauweise ermöglicht es, Bremswiderstandsbaueinheiten mit unterschiedlichen Arbeitsparametern zu schaffen, die die gleiche geometrische Größe aufweisen und deren einzelne Anschlüsse ebenfalls standardisierbar sind, wodurch auch Bremswiderstände unterschiedlicher Auslegung problemlos und ohne Modifizierung miteinander koppelbar sind und diese Kopplung auf einfache Art und Weise realisiert werden kann. Die Kopplung erfolgt in diesem Fall direkt über die jeweiligen Anschlußmittel.

Die Kühlvorrichtung der Bremswiderstandsbaueinheit kann in Form einer
a) Flüssigkeitskühleinrichtung
b) Luftkühleinrichtung ausgeführt sein. Im erst genannten Fall weist das Gehäuse wenigstens einen Zulauf und einen Rücklauf auf, wobei der Zulauf und der Rücklauf miteinander über einen Verbindungskanal gekoppelt sind. Der Verbindungskanal kann dabei teilweise von den Gehäusewänden und einer im Gehäuse angebrachten Zwischenwand realisiert werden, wodurch eine sehr großflächige Kühlung realisiert wird, die Anordnung und Integration der Gehäusezwischenwand jedoch derart erfolgen muß, daß der elektrische Teil gegenüber dem Kanal abgedichtet ist. Andere Möglichkeiten bestehen in der Realisierung eines rohrförmigen Verbindungskanales, der den Zulauf mit dem Rücklauf verbindet, wobei die Flüssigkeitsführung auf sehr unterschiedliche Art und Weise realisiert werden kann. Denkbar sind beispielsweise spiralförmig gestaltete Kühleinrichtungen in Form von Kühlschlangen, welche den elektrischen Teil umschlingen. Dabei erfolgt die Kühlung, insbesondere die Flüssigkeitskühlung durch Übergang der vom elektrischen Widerstand erzeugten Wärme über die Wände der rohrförmigen Verbindungskanäle auf die Flüssigkeit.

Auch die Kühlvorrichtung wird vorzugsweise so gestaltet, daß sowohl der Zulauf als auch der Rücklauf in die Gehäusewände derart eingearbeitet sind, daß diese einander gegenüberliegen. Dabei kann in der Blockbauweise eine einfache Leitungsverbindung zwischen dem Wasserzulauf einer ersten Bremswiderstandsbaueinheit und einer 1 + n-ten Bremswiderstandsbaueinheit realisiert werden.

Die integrierte Ansteuerelektronik in Form der Steuervorrichtung und der modulare Aufbau ermöglichen eine einfache Anpassung der Bremswiderstandsbaueinheit an die elektrische Zwischenkreisspannung des Spannungskreises, in welchen elektrische Energie eingespeist wird und die in eine andere Energieform umgewandelt werden soll. Änderungen im elektrischen System, das heißt im elektrischen Teil können auf einfache Weise durch Parametrierung, der Realisierung einer Parallel- beziehungsweise Serienschaltung oder auch den Austausch eines elektrischen Schalters erfolgen. Diese integrierte Ansteuerung bietet auch erhebliche Vorteile gegenüber der aus dem Stand der Technik bekannten Umrichteransteuerung, da dadurch Leitungen zwischen dem Umrichter und dem Bremswiderstand entfallen und damit auch die mit diesen verbundenen elektrischen Felder. Im einzelnen wird es möglich, den elektrischen Bremswiderstand auf einfache Art und Weise im Spannungskreis zu integrieren.

Erfindungswesentlich ist, daß die Steuervorrichtung, insbesondere die sogenannte Ansteuerelektronik, unmittelbar an dem Bremswiderstandsgehäuse angebaut, beziehungsweise in diesem eingebaut ist. Die Anschlüsse der Bremswiderstandsbaueinheit unterscheiden sich von den derzeit üblicherweise eingesetzten Anschlüssen dadurch, daß diese ein einfaches Erweitern des gesamten Bremswiderstandes um weitere Module durch einfache Koppelung dieser ermöglichen. Der Anschluß des Bremswiderstandes beziehungsweise der Bremswiderstandsbaueinheit kann direkt an den elektrischen Spannungszwischenkreis erfolgen.

Ein wesentlicher Vorteil der modularen und integrierten Bauweise besteht darin, daß mehrere Grundmodule auf einfache Art und Weise auf geringstem Bauraum miteinander gekoppelt werden können, wobei die einzelnen Module sich hinsichtlich der Auslegung der elektrischen Parameter erheblich voneinander unterscheiden können. Insbesondere kann die Größe des elektrischen Widerstandes zwischen den einzelnen Modulen untereinander variieren. Entscheidend ist lediglich, daß die Anschlußmittel zur Realisierung der elektrischen Koppelung der Ansteuerelektronik und des Widerstandes sowie in einer bevorzugten Ausführung auch der Koppelung der Kühlmittelversorgungsleitung derart an den einzelnen miteinander zu koppelnden Bremswiderstandsbaueinheiten angeordnet sind, daß diese komplementär zueinander sind. Die Anschlußmittel sind dazu jeweils an den in Einbaulage gleich ausgerichteten Gehäuseseiten der miteinander zu koppelnden Bremswiderstandsbaueinheiten gleich ausgerichtet und ausgeführt. Die Anschlußmittel zur elektrischen Koppelung und der mechanischen Koppelung der Kühlvorrichtung sind auf den gleichen Gehäusewänden einer Bremswiderstandsbaueinheit vorzusehen.

Es besteht keine Begrenzung hinsichtlich der Anzahl der miteinander kombinierbaren erfindungsgemäß gestalteten Bremswiderstandsbaueinheiten insbesondere Bremswiderstandsmodule. Bei Bedarf können beliebig viele Einzelmodule miteinander gekoppelt werden.

Die Ansteuerung des elektrischen Widerstandes, insbesondre des Stellgliedes des elektrischen Widerstandes, wird durch Anliegen wenigstens eines entsprechenden Eingangsignales als Sollwertvorgabe ausgelöst. Die Sollwertvorgabe, d. h. das Vorliegen eines Signales, welches den Wunsch nach Inbetriebnahme des elektrischen Widerstandes charakterisiert, erfolgt dabei entweder
a) extern, d. h. in Abhängigkeit eines Signales, welches außerhalb der Bremswiderstandsbaueinheit erzeugt wird oder vorliegt oder/und
b) direkt aus den in der Bremswiderstandsbaueinheit erfaßbaren und auf einen Zustand notwendiger Inbetriebnahme des elektrischen Widerstandes hinweisenden Größen.
   Dabei wird Variante b) bevorzugt. Bei dieser kann die Steuervorrichtung durch Zwischenschaltung zwischen beide Leitungstränge die Zwischenkreisspannurg selbst ermitteln. Dabei findet die Tatsache Berücksichtigung, daß sich beim Einsatz in Fahrzeugen derzeit der Bremsbetrieb vom Fahrbetrieb durch eine erhöhte Zwischenkreisspannung unterscheidet. Aus der Zwischenkreisspannung kann dann der Sollwert zur Aussteuerung des elektrischen Widerstandes ermittelt werden. Diese Lösung bietet den entscheidenden Vorteil, daß die Bremswiderstandsbaueinheit völlig autark betreibbar ist, d. h. aufgrund der Möglichkeit des direkten Zugriffs auf die, die Sollwerte wenigstens mittelbar beschreibenden Größen innerhalb der Bremswiderstandsbaueinheit in der Lage ist, auch die Bremsleistung völlig unabhängig von anderen Systemen einzustellen.

Bei Ansteuerung durch externe Sollwertvorgaben erfolgt die Vorgabe dieser beispielsweise digital, analog oder über einen CAN-Bus, d. h. eine Kommunikationsschnittstelle zwischen verschiedenen Steuervorrichtungen. Als mögliche Sollwerte fungieren dabei beispielsweise:
a) Temperatur
b) Spannung im Spannungszwischenkreis
c) Entladung der Zwischenkreiskondensatoren bei Zündung aus

Der Anschluß der Steuervorrichtung an den elektrischen Zwischenkreis bietet den Vorteil der Möglichkeit einer direkten Versorgung der Steuervorrichtung durch einen Spannungsregler.

Die erfindungsgemäße Lösung wird nachfolgend anhand von Figuren erläutert. Darin ist folgendes dargestellt:

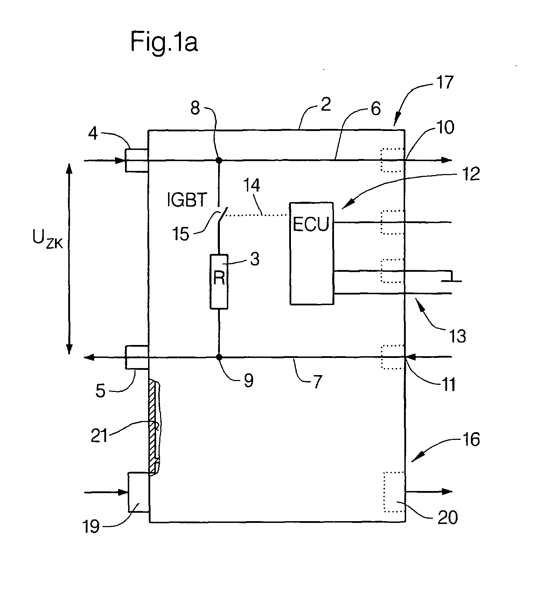

Figur 1a verdeutlicht schematisch in vereinfachter Darstellung den Grundaufbau einer erfindungsgemäß gestalteten Bremswiderstandsbaueinheit mit einem elektrischen Stellglied (JGTB), Widerstand, Steuervorrichtung und einer Kühlvorrichtung in Form einer Flüssigkeitskühlung;
Figur 1 b zeigt eine alternative Ausführungsform einer Bremswiderstandsbaueinheit zur Figur 1b, bei welcher die Sollwertvorgabe mittels den in der Bremswiderstandsbaueinheit erfaßbaren Meßgrößen erfolgt;
Figur 1c verdeutlicht eine weitere, besonders vorteilhafte Ausgestaltung einer Bremswiderstandsbaueinheit;
Figur 2 verdeutlicht in schematisch vereinfachter Darstellung die Blockbauweise, d. h. die Anordnung und Kopplung mehrerer erfindungsgemäß gestalteter Bremswiderstandsbaueinheiten hintereinander;
Figur 3 verdeutlicht beispielhaft eine Einsatzmöglichkeit der erfindungsgemäß gestalteten Bremswiderstandsbaueinheit.

Die Figur 1a verdeutlicht in schematisch vereinfachter Darstellung den Grundaufbau einer erfindungsgemäß gestalteten Ausführung einer elektrischen Bremswiderstandsbaueinheit 1, welche für den Einsatz in elektrischen Antriebssystemen verwendet werden kann. Diese umfaßt ein Gehäuse 2 und wenigstens einen, im Gehäuse integrierten elektrischen Widerstand 3. Der elektrische Widerstand 3 ist in diesem Fall schaltbar, d. h. es sind wenigstens zwei Schaltstellungen vorgesehen, welche eine Zuschaltung oder eine Unterbrechung des Stromflusses über den Widerstand ermöglichen. Die elektrische Bremswiderstandsbaueinheit umfaßt zwei Anschlüsse, einen ersten Anschluß 4 und einen zweiten Anschluß 5, welche der Kopplung des elektrischen Widerstandes 3 mit einem, hier im einzelnen nicht vollständig dargestellten Spannungskreis U_{zk}, dienen. Dazu erstrecken sich von den Anschlüssen 4 und 5 jeweils ein Leitungsstrang 6 beziehungsweise 7 zu den beiden Anschlußseiten 8 beziehungsweise 9 des elektrischen Bremswiderstandes 3 hin. Der elektrische Widerstand 3 ist in einer Verbindungsleitung zwischen dem ersten Leitungsstrang 6 und dem zweiten Leistungsstrang 7 angeordnet. Vorzugsweise erstrecken sich die Leitungsstränge, der erste Leitungsstrang 6 und der zweite Leitungsstrang 7 jeweils von den ihnen zugeordneten Anschlüssen zur Kopplung mit einem Spannungszwischenkreis U_{zk} über die gesamte Breite b_{B} der elektrischen Bremswiderstandsbaueinheit 1. Der elektrische Leitungsstrang 6 erstreckt sich dabei vom ersten Anschluß 4 zu einem weiteren dritten Anschluß 10 und der zweite Leitungsstrang 7 vom zweiten Anschluß 5 zum vierten Anschluß 11. Über den dritten und vierten Anschluß kann eine Kopplung mit weiteren Bremswiderstandsbaueinheiten in Form einer Parallelschaltung realisiert werden, indem die einzelnen elektrischen Bremswiderstandsbaueinheiten hintereinander angeordnet und elektrisch miteinander gekoppelt werden.

Wenigstens erforderlich sind wenigstens zwei Anschlüsse, vorzugsweise die Anschlüsse 4 und 5. Durch das Vorsehen des weiteren dritten Anschlusses 10 und des weiteren vierten Anschlusses 11, ist es möglich, die elektrische Widerstandsbaueinheit 1 auf unterschiedliche Art und Weise an den Spannungszwischenkreis U_{zk} anzuschließen, wobei auch ein Anschluß lediglich über die Anschlüsse 10 beziehungsweise 11 möglich ist, da jeweils über die Kopplung zwischen den Anschlußseiten 8 und 9 der elektrische Widerstand 3 die beiden Leitungsstränge 6 beziehungsweise 7 miteinander verbindet und damit - je nach Schaltstellung des elektrischen Widerstandes 3 (Zu- oder Abschaltung) - einen geschlossenen Spannungs- beziehungsweise Stromkreis ermöglicht.

Erfindungsgemäß weist die elektrische Bremswiderstandsbaueinheit 1 eine Steuervorrichtung 12 auf. Die Steuervorrichtung 12 ist im dargestellten Fall als elektronische Kontrolleinheit (ECU) ausgeführt und im Gehäuse integriert. Diese weist - je nach Einsatzfall - wenigstens einen Eingang und einen Ausgang auf. Der Eingang ist bei der Ausführung gemäß Figur 1a mit 13 und der Ausgang mit 14 bezeichnet. Der Eingang 13 kann dabei mit einer hier nicht dargestellten Einrichtung zur Vorgabe eines Betätigungssignales für den elektrischen Widerstand 3 gekoppelt sein, denkbar ist auch ein vor allem beim Einsatz in Antriebssystemen für Fahrzeuge die Kopplung mit einer übergeordneten Fahrsteuerung. über den Ausgang 14 ist mit dem Stellglied 15 des elektrischen Widerstandes 3, hier in Form eines Schalters, verbunden. Über den Eingang 14 wird der Schalter 15 angesteuert und integriert somit den elektrischen Widerstand in die Verbindungsleitung zwischen den Leitungssträngen 6 und 7 insbesondere den Anschlußseiten 8 und 9.

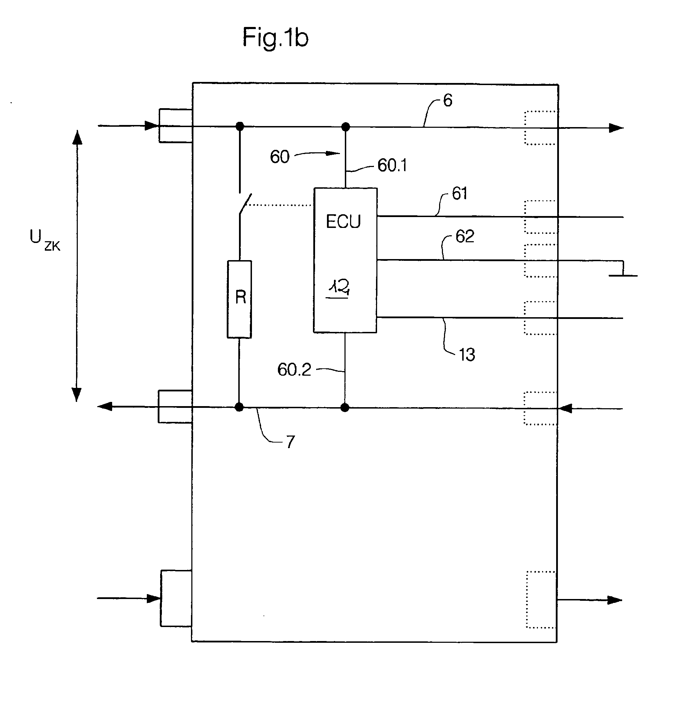

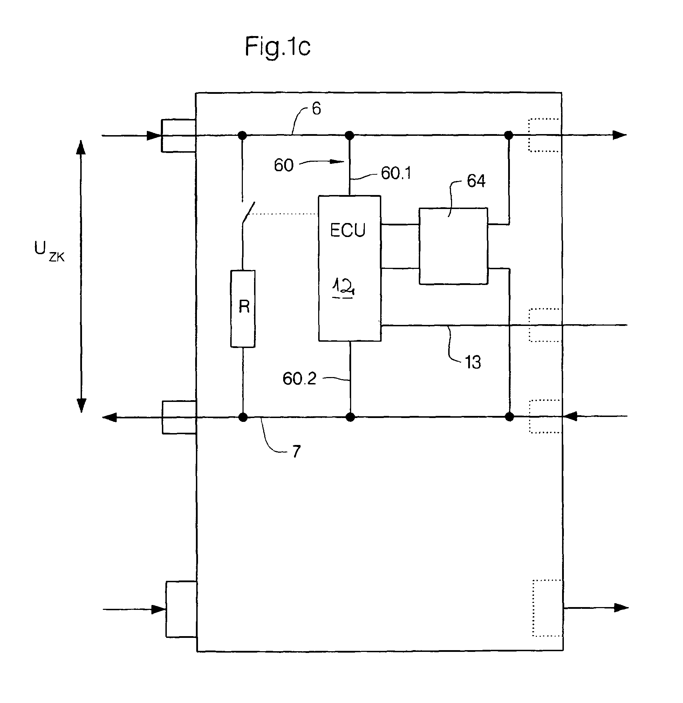

Bei den in den Figuren 1b und 1c dargestellten Bremswiderstandsbaueinheiten ist die Steuervorrichtung 12 in einer Verbindungsleitung 60 zwischen den Leitungssträngen 6 und 7 integriert bzw. ist über die Leitungsabschnitte 60.1 bzw. 60.2 mit den Leitungssträngen 6 bzw. 7 gekoppelt. Über diese Koppelung kann die Spannung im Spannungszwischenkreis direkt abgegriffen werden. Es wird somit möglich, eine mit der Bremswiderstandsbaueinheit völlig autarke Betriebsweise zu realisieren, da die Steuervorrichtung außer dem Bordnetzanschluß 61 und dem Masseanschluß 62 gemäß Figur 1b keine weitere Zuleitungen von außerhalb der Bremswiderstandsbaueinheit benötigt. Optional können jedoch zusätzliche externe Eingänge der Steuervorrichtung 12 vorgesehen werden, hier jeweils mit 13 bezeichnet.

Die elektronische Steuervorrichtung ist in den dargestellten Fällen der Figuren 1a - 1c vorzugsweise im Gehäuse 2 integriert. Dies bietet den Vorteil, daß die Steuervorrichtung 12 und der elektronische Widerstand 3 sowie die diesem zugeordnete Schaltvorrichtung 15 räumlich nah beieinander angeordnet werden und somit eine kompakte Gesamtbaueinheit geschaffen werden kann. Denkbar ist jedoch auch die hier nicht dargestellte Möglichkeit, die Steuervorrichtung 12 außen am Gehäuse 2 der elektrischen Bremswiderstandsbaueinheit 1 anzuordnen, insbesondere anzuflanschen.

Die elektrische Bremswiderstandsbaueinheit 1 umfaßt desweiteren eine Kühleinrichtung 16, welche wie im dargestellten Fall vorzugsweise als Wasserkühlung ausgeführt ist. Der elektronische Teil 17 umfaßt die Leitungsstränge 6, 7, den elektrischen Widerstand 3, die Schalteinrichtung 15, die Steuervorrichtung 12 in Form der elektronischen Kontrolleinheit und die Verbindungsleitungen, insbesondere die Verbindungsleitungen zwischen der Steuervorrichtung 12 und der Schalteinrichtung 15, welche den Ausgang 14 der Steuervorrichtung 12 mit der Schalteinrichtung 15 verbinden und die Verbindungsleitungen zwischen dem Eingang 13 der Steuervorrichtung 12 und dem Anschluß am Gehäuse, welcher mit 18 bezeichnet werden kann.

Die Kühleinrichtung 16 umfaßt wenigstens einen Zulauf 19 bzw. einen Zulaufstutzen zum Gehäuse 2, eine Rücklauföffnung 20 am Gehäuse 2 sowie einen Verbindungskanal, welcher hier im einzelnen nicht dargestellt ist und der den Zulauf 19 mit dem Rücklauf 20 verbindet. Der Verbindungskanal kann dabei entweder von den Gehäuseinnenwänden 21 gebildet werden, wobei in diesem Fall eine Zwischenwand zwischen dem elektronischen Teil 17 und dem, den Kanal bildenden Innenraum vorgesehen werden muß. Eine andere Möglichkeit besteht jedoch darin, den Zulauf 19 mit der Rücklauföffnung 20 über rohrförmige Verbindungsleitungen miteinander zu koppeln. Auch hier ist der Zulauf und der Rücklauf derart ausgebildet, daß die Funktionen von beiden getauscht werden können.

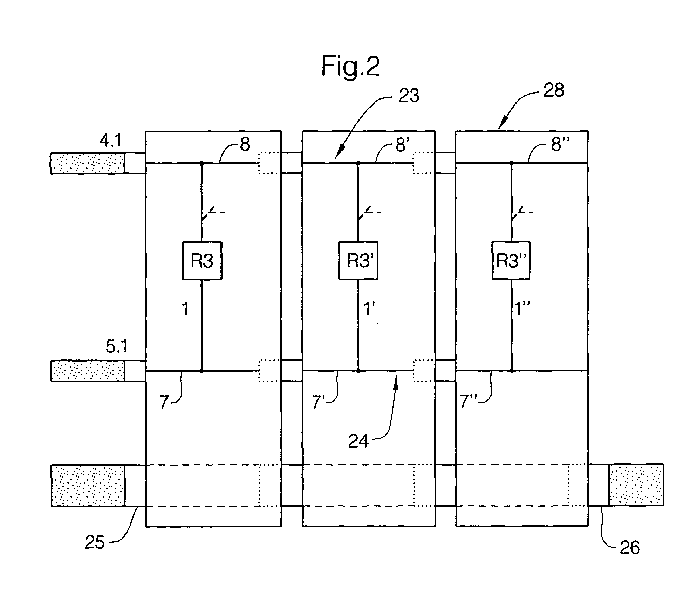

Vorzugsweise sind die einzelnen Anschlüsse immer an einander gegenüberliegenden Gehäuseswänden ausgebildet, so daß die Möglichkeit der Aneinanderreihung mehrerer elektrischer Bremswiderstandsbaueinheiten gegeben ist, wobei die einzelnen Anschlüsse 4, 5, 10, 11, 18 und der Zulauf 19 beziehungsweise der Rücklauf 20 vorzugsweise derart angeordnet sind, daß die Anschlußrichtung und damit die Stromflußrichtung beziehungsweise die Fließrichtung des Kühlmittels unerheblich sind. Die Figur 2 verdeutlicht eine derartige Hintereinanderreihung von drei erfindungsgemäß gestalteten Bremswiderstandsbaueinheiten 1, 1' und 1", beispielsweise wie in Figur 1 beschrieben. Diese Hirtereinanderreihung ist schematisch vereinfacht und damit nicht vollständig dargestellt. Auch daraus wird ersichtlich, daß über die Anschlüsse 4.1 und 5.1 die Kopplung mit einem Spannungskreis realisiert wird, wobei die einzelnen elektrischen Widerstände 3, 3', 3" parallel zueinander geschaltet sind. Die elektrischen Leitungsstränge 7 beziehungsweise 8 für die elektrische Bremswiderstandsbaueinheit 1, 7' beziehungsweise 8' für die elektrische Bremswiderstandsbaueinheit 1' und die Leitungsstränge 7" beziehungsweise 8" für die elektrische Bremswiderstandsbaueinheit 1'' sind miteinander zu einem einheitlichen Gesamtstrang 23 beziehungsweise 24 gekoppelt. Zwischen diesen beiden Leitungssträngen 23 und 24 sind die einzelnen Bremswiderstände in Form der elektrischen Widerstände 3, 3' und 3'' parallel zueinander geschaltet. Die Ansteuerung der einzelnen elektrischen Widerstände 3, 3' und 3" erfolgt dabei über die diesen zugeordneten und hier im einzelnen nicht dargestellten Steuervorrichtungen 12, 12', 12" wobei die einzelnen Steuervorrichtungen miteinander koppelbar sind. In Analogie gilt diese Aussage auch für die einzelnen Verbindungskanäle zwischen den Zuläufen am Gehäuse der einzelnen Bremswiderstandsbaueinheiten und den Rücklauföffnungen. Die Anschlußstutzen beziehungsweise Anschlüsse sind dabei derart ausgeführt, daß diese ohne weiteres auch für die Realisierung eines Anschlusses mit der benachbarten Bremswiderstandsbaueinheit realisiert werden können. Im dargestellten Fall ergibt sich somit der Gesamtzulauf 25 an der Bremswiderstandsbaueinheit 1 und der Gesamtrücklauf 26 an der Bremswiderstandsbaueinheit 1", wobei der Verbindungskanal sich über die Bremswiderstandsbaueinheit 1, 1' und 1'' erstreckt und aus der Summe der Teilkanäle sowie der Verbindungen, welche über die Anschlußstutzen realisiert werden, gebildet wird.

Während in Figur 1b die Beaufschlagung der Steuervorrichtung 12 über einen Bordnetzanschluß 61 erfolgt, übernimmt in Figur 1c ein Spannungsregler 64 direkt diese Aufgabe. Dieser ist ebenfalls in den Spannungszwischenkreis integriert.

Die in der Figur 1c beschriebene Ausführung stellt eine besonders kompakte und damit bevorzugte vorteilhafte erfindungsgemäße Ausgestaltung einer Bremswiderstandsbaueinheit mit einem Minimum an erforderlichen Anschlüssen dar.

Andere Ausführungen bezüglich der Anordnung der einzelnen Leitungsstränge, der elektrischen Widerstände sowie der Anschlußeinrichtung, als in den Figuren 1a - 1c dargestellt sowie die Anwendung eines anderen Kühlsystems sind ebenfalls denkbar. Die konkrete konstruktive Umsetzung liegt dabei im Ermessen des Fachmannes. Desweiteren ergibt sich die Anzahl der eingesetzten Bremswiderstandsbaueinheiten, welche zu einer Gesamtbremswiderstandsbaueinheit 28 zusammengefaßt werden aus den Einsatzerfordernissen.

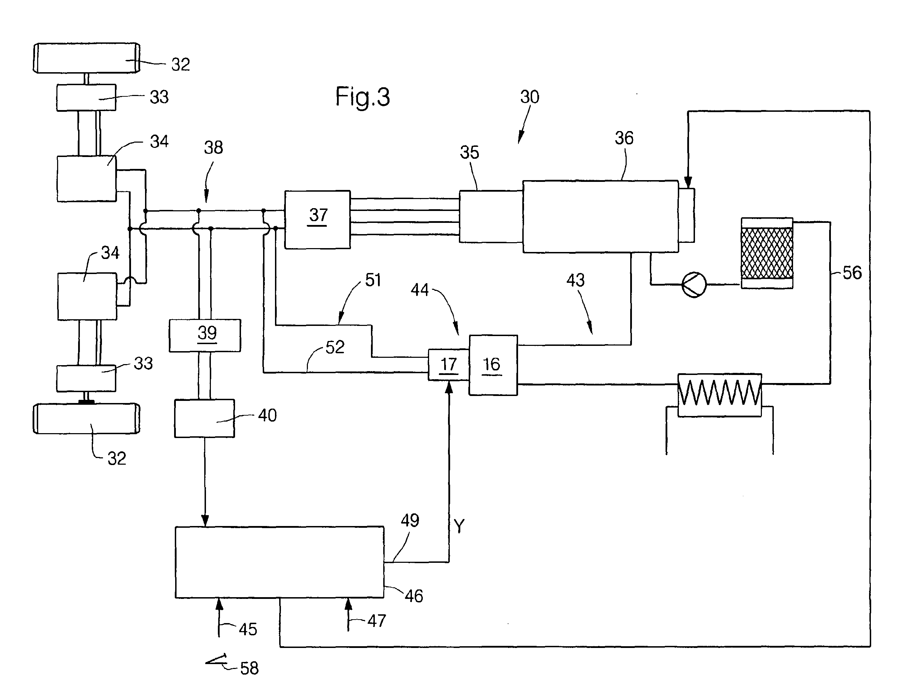

Die Figur 3 verdeutlicht die Integration eines erfindungsgemäß gestalteten Bremswiderstandes zu Aufnahme der anfallenden und elektrisch vorliegenden Bremsleistung und zusätzlich zur Heizung in einem dieselelektrischen Antriebssystem. Dieser Anwendungsfall stellt lediglich ein Beispiel dar und dient in keiner Weise der Beschränkung. In der Figur 3 ist eine Antriebsvorrichtung 30 dargestellt, welche mindestens einen, wenigstens ein Antriebsrad 32 wenigstens mittelbar antreibenden Elektromotor 33, welcher vorzugsweise als Asynchron- oder Transversalflußmaschine ausgeführt ist, umfaßt. Im dargestellten Fall wird jeder Elektromotor 33 von jeweils einer Wechselrichtereinheit 34 mit elektrischer Leistung versorgt. Desweiteren ist eine, im Traktionsbetrieb, das heißt im Betriebszustand "Fahren" bei Kraftübertragung von einer Verbrennungskraftmaschine 36 auf die Räder 32 als Generator betreibbare elektrische Maschine 35, nachfolgend als Generator bezeichnet, vorgesehen, welche vorzugsweise ebenfalls als Transfersalflußmaschine ausgeführt ist und die mechanisch mit der Verbrennungskraftmaschine 36 koppelbar ist. Zur Erzeugung der elektrischen Leistung wird der Generator 35 durch eine Wechselrichtereinheit, vorzugsweise einen Vierquadranten-Wechselrichter 37 angesteuert. Die Wechselrichtereinheiten 34 und 37 für die mit den Antriebsrädern verbundenen Elektromotoren 33 und den Generator 35 sind über einen Spannungszwischenkreis 38 miteinander gekoppelt. Der Spannungszwischenkreis 38, welcher vorzugsweise als Gleichspannungszwischenkreis ausgeführt ist, ist über eine Ansteuereinrichtung 39 mit einer Energiespeichereinrichtung 40 in Form einer Batterie koppelbar. Diese Ansteuereinrichtung 39 ermöglicht dabei das wahlweise An- oder Entkoppeln der Energiespeichereinrichtung 40 vom Spannungszwischenkreis 38.

Die Antriebsvorrichtung umfaßt desweiteren ein Heizsystem 43. Dem Heizsystem 43 sind Mittel 44 zur wenigstens mittelbaren Beeinflussung, insbesondere Erhöhung der Temperatur am Heizsystem 43 zugeordnet. Diese sind wenigstens mit einer zentralen Steuer-/Regelvorrichtung 46 gekoppelt, so daß bei Bedarf entweder in Abhängigkeit von einem Fahrerwunsch, ein Signal für eine gewünschte Temperatur T an einem ersten Eingang 45 der zentralen Steuer- und/oder Regelvorrichtung 46, welche vorzugsweise der zentralen Fahrsteuerurg entspricht, anliegen kann oder aber ein bestimmter fest vordefinierbarer gewünschter Temperaturwert, welcher in der zentralen Steuerbeziehungsweise Regelvorrichtung 46 hinterlegt sein kann, als Sollwert fungiert. Die Sollwertvorgabe kann desweiteren auch aus in der zentralen Steuer- und/oder Regelvorrichtung 46 hinterlegten Kennfeldern in Abhängigkeit von der Außentemperatur und der Temperatur im Fahrgastinnenraum des Fahrzeuges erfolgen. Im dargestellten Fall ist der erste Eingang 45 mit einer Einrichtung 58 zur Vorgabe der gewünschten Temperatur T gekoppelt. Aus dieser Größe kann dann eine Stellgröße Y zur wenigstens mittelbaren Ansteuerung der, die Temperatur T im Heizsystem 43 wenigstens mittelbar beeinflussenden Größe gebildet werden. Eine weitere denkbare Möglichkeit besteht auch darin, bei Bedarf automatisch die entsprechende Temperatur T im Heizsystem 43 durch Regelung einzustellen wobei dazu an der zentralen Steuer- und/oder Regelvorrichtung 46 an einem weiteren Eingang 47 ein Signal für eine die Temperatur T im Heizsystem wenigstens mittelbar charakterisierende Ist-Größe anliegt. Der Wert dieser Ist-Größe kann beispielsweise direkt mittels eines Sensors in Form eines Temperatursensors im Heizsystem 43 ermittelt werden. Die zentrale Steuerund/oder Regelvorrichtung 46 bildet dann aus der oder den Eingangsgrößen eine Stellgröße Y, welche an einem ersten Ausgang 49 der zentralen Steuerund/oder Regelvorrichtung 46 ausgegeben wird und an dem Mittel 44 wirksam wird. Die Mittel 44 zur Erhöhung der Temperatur im Heizsystem 43 sind direkt mit dem Spannungszwischenkreis 38 gekoppelt. Die Kopplung erfolgt dabei derart, daß die einzelnen Anschlußleitungen, im dargestellten Fall die beiden Verbindungsleitungen 51 und 52 mit dem Spannungszwischenkreis in einem elektrischen Bereich zwischen der Spannungswechselrichtereinheit, hier den Wechselrichtereinheiten 34 beziehungsweise 35 und den als Antriebsmotoren fungierenden Elektromotoren 33 verbunden sind. Demzufolge kann im generatorischen Betrieb der als Antriebsmotoren fungierenden Elektromotoren 33 im normalen Traktionsbetrieb, wie er beispielsweise beim Bremsvorgang realisiert wird, die gesamte beziehungsweise ein Großteil der von den im Bremsbetrieb als Generator betreibbaren elektrischen Maschinen erzeugte elektrische Leistung an den als elektronische Bremswiderstandsbaueinheit ausgeführten Mittel 44 umgesetzt werden. Die Ansteuerung der in den elektrischen Bremswiderstandsbaueinheiten integrierten elektrischen Widerständen erfolgt über die Steuer- beziehungsweise Regelvorrichtung 46, deren Stellgröße Y das Eingangssignal für die in der elektrischen Bremswiderstandseinheit integrierte Steuervorrichtung bildet. Die in der elektrischen Bremswiderstandsbaueinheit, welche beispielsweise im Aufbau der in der Figur 1 beschriebenen entsprechen kann, integrierte Steuervorrichtung bildet dann eine Stellgröße, welche am Ausgang der Steuervorrichtung anliegt und der Ansteuerung des elektrischen Widerstandes in der elektrischen Bremswiderstandsbaueinheit dient. Die gesamte elektrische Bremswiderstandsbaueinheit ist hier mit 44 bezeichnet. Die Heizleistung wird dabei über die Zeitdauer der Zuschaltung des elektrischen Widerstandes und der Auslegung des elektrischen Widerstandes realisiert.

Desweiteren ist in der Figur 3 ersichtlich, daß die elektrische Bremswiderstandsbaueinheit 44 hinsichtlich des die Kühleinrichtung umfassenden Teiles 16 in einem Flüssigkeitskreislauf 56 integriert ist und von der Flüssigkeit dieses Kreislaufes durchflossen wird, wobei die Flüssigkeit bei Aktivierung des elektrischen Widerstandes indirekt durch Wärmeübertragung erwärmt wird und somit gleichzeitig die elektrische Bremswiderstandsbaueinheit 44 vor Überhitzung geschützt wird. Die erwärmte Flüssigkeit kann dann beispielsweise zur Erwärmung des Fahrgastraumes oder anderer Systeme genutzt werden.

Die Figur 3 zeigt lediglich eine Einsatzmöglichkeit, Abwandlungen sind denkbar und liegen im Ermessen des Fachmannes.

## Patentansprüche

1. Elektrische Bremswiderstandsbaueinheit (1,1',1", 28, 44) für elektrische Antriebssysteme mit einem Gehäuse (2); einen im Gehäuse (2) integrierten elektrischen Widerstand (3,3',3"); mit einer, dem elektrischen Widerstand (3,3',3") zugeordneten Kühlvorrichtung (16) zur wenigstens indirekten Kühlung; **gekennzeichnet durch** die folgenden Merkmale:
mit einer, dem elektrischen Widerstand (3,3',3") zugeordneten Steuervorrichtung (12,12',12") zur wenigstens mittelbaren Ansteuerung eines dem
elektrischen Widerstand (3,3',3") zugeordneten Stellgliedes (15);
die Steuervorrichtung (12,12',12") und das Stellglied (15) sind in der Bremswiderstandsbaueit (1,1',1",28,44) integriert.

2. Elektrische Bremswiderstandsbaueinheit (1,1',1",28,44) nach Anspruch 1, **dadurch gekennzeichnet, daß** die Steuervorrichtung (12,12',12") im Gehäuse (2) integriert ist.

3. Elektrische Bremswiderstandsbaueinheit (1,1',1",28,44) nach Anspruch 1, **dadurch gekennzeichnet, daß** die Steuervorrichtung (12,12',12") an einer Außenwand des Gehäuses (2) der Bremswiderstandsbaueinheit (1,1'1",28,44) angeordnet ist.

4. Elektrische Bremswiderstandsbaueinheit (1,1',1",28,44) nach einem der Ansprüche 1 bis 3, **gekennzeichnet durch** die folgenden Merkmale:
der elektrische Widerstand (3,3'3") ist Bestandteil eines ersten elektrisch/elektronischen Teiles (17), elektrisch/elektronische Teil (17) umfaßt des weiteren zwei Leitungsstränge (6,7,7'7",8,8',8") einen ersten Leitungsstrang (6) und einen zweiten Leitungsstrang (7,7'7"8,8',8") welche mit einem Spannungskreis koppelbar sind;
die Leitungsstränge (6,7,7'7"8,8',8") erstrecken sich von einer Gehäusewand zur gegenüberliegenden Gehäusewand, wobei die Anschlüsse (4,5,10,11,18) an der Gehäusewand einander gegenüberliegend angeordnet sind;
der elektrische Widerstand (3,3',3") ist zwischen beiden Leitungssträngen (6,7,7',7",8,8',8") in einer Verbindungsleitung (51,52) angeordnet.

5. Elektrische Bremswiderstandsuenheit (1,1,1",28,44) nach Anspruch 4, **dadurch gekennzeichnet, daß** eine Mehrzahl von Verbindungsleitungen (51,52) zwischen dem ersten (6) und dem zweiten Leitungsstrang (7,7'7",8,8',8") vorgesehen sind.

6. Elektrische Bremswiderstandsbaueinheit (1,1',1",28,44) nach einem der Ansprüche 1 bis 5, **dadurch gekennzeichnet, daß** die Steuervorrichtung (12,12',12") wenigstens einen Eingang (13) und einen Ausgang (14) aufweist, wobei der Eingang (13) mit einer Einrichtung zur Vorgabe eines Signals zur Ansteuerung des elektrischen Widerstandes (3,3',3") koppelbar ist und der Ausgang (14) mit dem elektrischen Widerstand (3,3',3") koppelbar ist.

7. Elektrische Bremswiderstandsbaueinheit (1,1'1",28,44) nach Anspruch 6, **gekennzeichnet durch** die folgenden Merkmale:
die Steuervorrichtung (12,12',12") ist zwischen den beiden Leitungssträngen (6,7,7'7",8,8',8") in einer weiteren Verbindungsleitung (51,52) angeordnet;
die Koppelung der Steuervorrichtung (12,12',12") mit den beiden Leitungsstrangen (6,7,7',8,8',8") bildet zwei Eingäng (13) der Steuervorrichtung (12,12',12")

8. Elektrische Bremswiderstandsbaueinheit (1,1',1",28,44) nach einem der Ansprüche 1 bis 7, **dadurch gekennzeichnet, daß** die Kühlvorrichtung (16) eine Flüssigkeitskühleinrichtung umfaßt.

9. Elektrische Bremswiderstandsbaueinheit (1,1',1",28,44) nach Anspruch 8, **gekennzeichnet durch** die folgenden Merkmale:
die Flüssigkeitskühleinrichtung umfaßt einen Flüssigkeitszulauf (19) und
einem Flüssigkeitsrücklauf (20), welche miteinander über einen Verbindungskanal gekoppelt sind;
der Flüssigkeitszulauf (19) und der Flüssigkeitsrücklauf (20) sind an den Gehäusewänden, an welchen die elektrischen Anschlüsse (5,5,10,11,18) vorgesehen sind, angeordnet.

10. Elektrische Bremswiderstandsbaueinheit (1,1',1",28,44) nach Anspruch 9, **dadurch gekennzeichnet, daß** der Zulauf (19) und der Rücklauf (20) an einander gegenüberliegenden Gehäusewänden angeordnet sind.

11. Elektrische Bremswiderstandsbaueinheit (1,1',1",28,44) nach einem der Ansprüche 1 bis 10, **dadurch gekennzeichnet, daß** diese Mittel zur mechanischen Koppelung mit anderen Bremswiderstandsbaueinheiten (1,1',1",28,44) aufweist.

12. Elektrische Bremswiderstandsbaueinheit (1,1',1",28,44) nach Anspruch 11, **dadurch gekennzeichnet, daß** der Zulauf (19) und der Rücklauf (20) sowie die Anschlüsse (4,5,10,11,18) der sich von einer Gehäusewand zur gegenüberliegenden Gehäusewand erstreckenden Leitungsstränge (6,7,7',7",8,8',8") des elektrisch- bzw. elektronischen Teiles (17) und die Mittel zur mechanischen Koppelung an den gleichen einander gegenüberliegnden Gehäusewänden angeordnet sind.

13. Elektrische Bremswiderstandsbaueinheit (1,1',1",28,44) nach Anspruch 11, **dadurch gekennzeichnet, daß** die Mittel von den Anschlüssen des elektronischen Teiles (17) und/oder dem Flüssigkeitszulauf (19) bzw. Rücklauf (20) der Kühlvorrichtung (16) gebildet werden.

## Claims

1. An electric braking resistance module (1, 1', 1", 28, 44) for electric drive systems, comprising a housing (2), an electric resistor (3, 3', 3") integrated in the housing (2), a cooling apparatus (16) associated with the electric resistor (3, 3', 3") for at least indirect cooling, **characterized by** the following features:
a control apparatus (12, 12', 12") associated with the electric resistor (3, 3', 3") for triggering at least indirectly an actuator (15) associated with the electric resistor (3, 3', 3"), the control apparatus (12, 12', 12") and the actuator (15) are integrated in the electric braking resistance module (1, 1', 1 ", 28, 44).

2. An electric braking resistance module (1, 1', 1", 28, 44) according to claim 1, **characterized in that** the control apparatus (12, 12', 12") is integrated in the housing (2).

3. An electric braking resistance module (1, 1', 1", 28, 44) according to claim 1, **characterized in that** the control apparatus (12, 12', 12") is arranged on an outside wall of the housing (2) of the braking resistance module (1, 1', 1", 28, 44).

4. An electric braking resistance module (1, 1', 1", 28, 44) according to one of the claims 1 to 3, **characterized by** the following features:
the electric resistor (3, 3', 3") is a component of a first electric/electronic part (17), the electric/electronic part (17) further comprises two cable runs (6, 7, 7', 7", 8, 8', 8"), a first cable run (6) and a second cable run (7, 7', 7", 8, 8', 8") which can be coupled with a voltage circuit, the cable runs (6, 7, 7', 7", 8, 8', 8") extend from one housing wall to the opposite housing wall, with the connections (4, 5, 10, 11, 18) being arranged on the housing wall to be opposite of one another, the electric resistor (3, 3', 3") is arranged between
the two cable runs (6, 7, 7', 7", 8, 8', 8") in a connection line (51, 52).

5. An electric braking resistance module (1, 1', 1", 28, 44) according to claim 4, **characterized in that** a plurality of connection lines (51, 52) are provided between the first (6) and the second cable run (7, 7', 7", 8, 8', 8").

6. An electric braking resistance module (1, 1', 1", 28, 44) according to one of the claims 1 to 5, **characterized in that** the control apparatus (12, 12', 12") comprises at least one input (13) and one output (14), with the input (13) being connectable with a device for predetermining a signal for triggering the electric resistor (3, 3', 3") and the output (14) being connectable with the electric resistor (3, 3', 3").

7. An electric braking resistance module (1, 1', 1", 28, 44) according to claim 6, **characterized by** the following features:
the control apparatus (12, 12', 12") is arranged between the two cable runs (6, 7, 7', 7", 8, 8', 8") of a further connection line (51, 52), the coupling of the control apparatus (12, 12', 12") with the two cable runs (6, 7, 7', 7", 8, 8', 8") forms two inputs (13) of the control apparatus (12, 12', 12").

8. An electric braking resistance module (1, 1', 1", 28, 44) according to one of the claims 1 to 7, **characterized in that** the cooling apparatus (16) comprises a fluid cooling device.

9. An electric braking resistance module (1, 1', 1", 28, 44) according claim 8, **characterized by** the following features:
the fluid cooling device comprises a fluid inlet (19) and a fluid return (20) which are coupled with each other via a connection duct, the fluid inlet (19) and the fluid return (20) are arranged on the housing walls on which the electric connections (4, 5, 10, 11, 18) are provided.

10. An electric braking resistance module (1, 1', 1", 28, 44) according to claim 9, **characterized in that** the inlet (19) and the return (20) are arranged on mutually opposing housing walls.

11. An electric braking resistance module (1, 1', 1", 28, 44) according to one of the claims 1 to 10, **characterized in that** it comprises means for mechanical coupling with other electric braking resistance modules (1, 1', 1", 28, 44).

12. An electric braking resistance module (1, 1', 1", 28, 44) according to claim 11, **characterized in that** the inlet (19) and the return (20) as well as the connections (4, 5, 10, 11, 18) of the cable runs (6, 7, 7', 7", 8, 8', 8") of the electric or electronic part (17) extending from one housing wall to the opposite housing wall and the means for mechanical coupling are arranged on the same mutually opposing housing walls.

13. An electric braking resistance module (1, 1', 1", 28, 44) according to claim 11, **characterized in that** the means are formed by the connections of the electronic part (19) and/or the fluid inlet (19) or fluid return (20) of the cooling apparatus (16).

## Revendications

1. Ensemble de résistance de freinage électrique (1, 1', 1", 28, 44) pour de systèmes d'entraînement électriques avec un boîtier (2) une résistance électrique (3, 3', 3") intégrée dans le boîtier (2),
avec un dispositif de refroidissement (16) associé à la résistance électrique (3, 3', 3") pour un refroidissement au moins indirect ;
**caractérisé en ce qu'**il possède les caractéristiques suivantes :
un dispositif de commande (12, 12', 12") associé à la résistance électrique
(3, 3', 3") pour l'actionnement au moins indirect d'un organe de réglage (15) associé à la résistance électrique (3, 3', 3"),
le dispositif de commande (12, 12', 12") et l'organe de réglage (15) sont intégrés dans l'ensemble de résistance de freinage (1, 1', 1", 28, 44).

2. Ensemble de résistance de freinage électrique (1, 1', 1", 28, 44) selon la revendication 1, **caractérisé en ce que** le dispositif de commande (12, 12', 12") est intégré dans le boîtier (2).

3. Ensemble de résistance de freinage électrique (1, 1', 1", 28, 44) selon la revendication 1, **caractérisé en ce que** le dispositif de commande (12, 12', 12") est disposé sur une paroi extérieure du boîtier (2) de l'ensemble de résistance de freinage (1, 1', 1 ", 28, 44).

4. Ensemble de résistance de freinage électrique (1, 1', 1", 28, 44) selon l'une des revendications 1 à 3, **caractérisé en ce que :**
la résistance électrique (3, 3', 3") fait partie d'un premier composant électrique/électronique (17)
le composant électrique/électronique (17) comprend en outre deux brins de ligne
(6, 7, 7', 7", 8, 8', 8"), un premier brin de ligne (6) et un deuxième brin de ligne (7, 7', 7", 8, 8', 8"), qui peuvent être couplés à un circuit de tension ;
les brins de ligne (6, 7, 7', 7", 8, 8', 8") sont disposés d'une paroi du boîtier à la paroi opposée du boîtier, les connexions (4, 5, 10, 11, 18) sur la paroi du boîtier étant disposées l'une en face de l'autre ;
la résistance électrique (3, 3', 3") est disposée entre les deux brins de ligne (6, 7, 7', 7", 8, 8', 8") dans une ligne de liaison (51, 52).

5. Ensemble de résistance de freinage électrique (1, 1', 1", 28, 44) selon la revendication 4, **caractérisé en ce qu'**une pluralité de lignes de liaison (51, 52) est disposée entre le premier brin de lignes (6) et le deuxième de ligne (7, 7', 7", 8, 8', 8").

6. Ensemble de résistance de freinage électrique (1, 1', 1", 28, 44) selon l'une des revendications 1 à 5, **caractérisé en ce que** le dispositif de commande (12, 12', 12") présente au moins une entrée (13) et une sortie (14), l'entrée (13) pouvant être couplée avec un dispositif pour déterminer un signal pour l'activation de la résistance électrique (3, 3', 3") et la sortie (14) pouvant être couplée avec la résistance électrique (3, 3', 3").

7. Ensemble de résistance de freinage électrique (1, 1', 1", 28, 44) selon la revendication 6, **caractérisé en ce que :**
le dispositif de commande (12, 12', 12") est disposé entre les deux brins de ligne
(6, 7, 7', 7", 8, 8', 8") dans une autre ligne de liaison (51, 52) ;
le couplage du dispositif de commande (12, 12', 12") avec les deux brins de ligne
(6, 7, 7', 7", 8, 8', 8") forme deux entrées (13) du dispositif de commande (12, 12', 12").

8. Ensemble de résistance de freinage électrique (1, 1', 1", 28, 44) selon l'une des revendications 1 à 7, **caractérisé en ce que** le dispositif de refroidissement (16) comporte un dispositif de refroidissement par liquide.

9. Ensemble de résistance de freinage électrique (1, 1', 1", 28, 44) selon la revendication 8, **caractérisé en ce que :**
le dispositif de refroidissement par liquide comprend une entrée de liquide (19) et
une sortie de liquide (20) qui sont couplées l'une avec l'autre par un canal de liaison ;
l'entrée de liquide (19) et la sortie de liquide (20) sont disposées sur les parois du boîtier sur lesquelles sont prévues les connexions électriques (4, 5, 10, 11, 18).

10. Ensemble de résistance de freinage électrique (1, 1', 1", 28, 44) selon la revendication 9, **caractérisé en ce que** l'entrée (19) et la sortie (20) sont disposées sur des parois opposées du boîtier.

11. Ensemble de résistance de freinage électrique (1, 1', 1 ", 28, 44) selon l'une des revendications 1 à 10, **caractérisé en ce qu'**il présente des moyens pour le couplage mécanique avec d'autres ensembles de résistance de freinage électrique (1, 1', 1", 28, 44).

12. Ensemble de résistance de freinage électrique (1, 1', 1", 28, 44) selon la revendication 11, **caractérisé en ce que** l'entrée (19) et la sortie (20) ainsi que les connexions (4, 5, 10, 11, 18) des brins de ligne (6, 7, 7', 7", 8, 8', 8") du composant électrique ou électronique (17) s'étendant d'une paroi du boîtier à la paroi de boîtier opposé et les moyens de couplage mécanique sont disposés sur les mêmes parois de boîtier opposées l'une à l'autre.

13. Ensemble de résistance de freinage électrique (1, 1', 1", 28, 44) selon la revendication 11, **caractérisé en ce que** les moyens sont formés par les connexions du composant électronique (17) et/ou par l'entrée (19) ou la sortie de liquide (20) du dispositif de refroidissement (16).
